# EUROPÄISCHE PATENTSCHRIFT

(11) **EP 2 477 715 B1**
(45) Veröffentlichungstag und Bekanntmachung des Hinweises auf die Patenterteilung: **08.10.2014**
(21) Anmeldenummer: 10768389.8
(22) Anmeldetag: 31.08.2010
(51) Int. Cl.: B01D 46/10, B01D 46/52, B01D 46/00

(54) **TONERSTAUBFILTER MIT FLAUSCHBAND**
TONER DUST FILTER HAVING HOOK-AND-LOOP TAPE
FILTRE À POUSSIÈRE DE TONER POURVU D'UNE BANDE DE TISSUS À LONGS POILS

(30) Priorität: 14.09.2009 DE 102009041134
(43) Veröffentlichungstag der Anmeldung: 25.07.2012
(73) Patentinhaber: Carl Freudenberg KG, 69469 Weinheim (DE)
(72) Erfinder: SCHMITT, Thorsten, 69469 Weinheim (DE); SCHISCHKA, Harald von, 76684 Östringen (DE); KADEL, Werner, 69488 Birkenau (DE); BREUER, Andreas, 69488 Birkenau (DE)
(86) Internationale Anmeldenummer: PCT/EP2010/005324
(87) Internationale Veröffentlichungsnummer: WO 2011/029540

(56) Entgegenhaltungen:
- CH-A- 489 264
- DE-A1- 4 443 676
- DE-A1-102007 015 662
- DE-A1-102007 038 066
- DE-U1-202006 001 441
- US-A- 5 462 569

## Beschreibung

Die Erfindung betrifft ein Filterelement zur Verwendung an oder in Laserdruckern, Fax- oder Kopiergeräten **gemäß dem Oberbegriff des Patentanspruchs 1.**

### Stand der Technik

**Die** DE 20 2006 001 441 U1 **zeigt ein Filterelement, welches ein Verstärkungselement aufweist. Die** DE 10 2007 015 662 A1 **zeigt ein Filterelement mit einem Abschlusselement, welches mit einem Dichtelement verbunden ist. Die** US 5,462,569 **zeigt ein in einem Gehäuse aufgenommenes Filterelement und die** DE 10 2007 038 066 A1 **ein flaches Filtermedium.**

Aus der DE 33 17 388 A1 ist bereits ein Filterelement der eingangs genannten Art bekannt. Das dort offenbarte Filterelement ist mit einem Flauschband und einem Hakenband versehen. Das Hakenband kann an einer Gegenfläche dauerhaft befestigt werden, wobei das Flauschband vom Hakenband lösbar ist und danach wieder am Hakenband festlegbar ist.

Aus dem Stand der Technik sind auch bereits Filterelemente bekannt, welche der Filterung von Tonerstaub in Büroräumen dienen. Hierzu werden üblicherweise im Wesentlichen rechteckförmige Filterelemente, sogenannte Flachfilter, mit einem gefalteten Filtermedium, nämlich einem Faltenpack, verwendet. Diese Filterelemente werden zu Stabilisierungszwecken an den Stirnseiten und oder Längsseiten, insbesondere durch Verkleben, angebracht

Dennoch besteht die Gefahr, dass ein Filterelement im Gebrauch verbogen oder verwunden wird. Hierbei können sich Spalten und/ oder Ritzen ausbilden. Dies kann zu erheblichen Leckagen führen. Hierdurch kann Tonerstaub in Büroräumen verteilt werden und Mitarbeiter in den Büroräumen schädigen.

### Darstellung der Erfindung

Der Erfindung liegt daher die Aufgabe zugrunde, ein Filterelement der eingangs genannten Art derart auszugestalten und weiterzubilden, dass das Filterelement an einem Laserdrucker, Faxgerät oder Kopiergerät problemlos angebracht und wieder entfernt werden kann, wobei Leckagen dauerhaft vermieden werden.

Die vorliegende Erfindung löst die zuvor genannte Aufgabe durch die Merkmale des Patentanspruchs 1.

Erfindungsgemäß ist zunächst erkannt worden, dass ein Filterelement beim Entfernen von einem Laserdrucker, Faxgerät oder Kopiergerät leicht deformiert werden kann. Die Deformierung kann zu Spalten oder Ritzen und damit zu Leckagen führen. Darauf ist erkannt worden, dass ein einsteckbares Profil eine Endfaltenstabilisierung bewirkt, welche das Filterelement gegen Verwindungen und Deformierungen stabilisiert. Dabei ist insbesondere erkannt worden, dass die Anordnung der Haftmittel am Profil bewirkt, dass das Filterelement im Bereich eines relativ steifen und stabilen Profils ergriffen werden kann, wenn es von einem Laserdrucker entfernt werden soll. Auch hierdurch werden Deformierungen und Verwindungen des Filterelements vermieden. Insoweit schafft das Profil einen Soll-Angriffsbereich, den eine montierende Person anfassen soll, um das Filterelement zu lösen. Schließlich ist erkannt worden, dass durch ein einsteckbares Profil bereits bestehende Filterelemente problemlos nachgerüstet und stabilisiert werden können. Insoweit kann ein Filterelement an einem Laserdrucker, Faxgerät oder Kopiergerät problemlos angebracht und wieder entfernt werden, wobei Leckagen dauerhaft vermieden werden.

**Die Haftmittel sind als Flauschband ausgestaltet. Ein Flauschband kann Teil einer Velcro-Verbindung sein. Eine Velcro-Verbindung kann mehr als 10000 mal gelöst und wieder verbunden werden. Hierdurch wird ein sehr langlebiges Haftmittel zur Verfügung gestellt. Beim Öffnen und Schließen von Laserdruckern, Faxgeräten oder Kopiergeräten, insbesondere zu Reparaturzwecken oder zum Auswechseln von Tonerkartuschen, muss das Filterelement häufig entfernt werden. Hierzu wird es von einer Gegenfläche entfernt und nach Durchführung der Reparatur- oder Austauschschritte wieder erneut an der Gegenfläche festgelegt. Insoweit besteht ein Bedarf nach einem Filterelement, welches problemlos an einer Gegenfläche befestigt und wieder von dieser gelöst werden kann. Des Weiteren bildet ein Flauschband ein weiteres Filtermediums aus, welches Tonerstaub zurückhält.**

Folglich ist die eingangs genannte Aufgabe gelöst

Die Befestigungseinrichtung könnte zwei Schenkel aufweisen, wobei die Schenkel von der den Haftmitteln abgewandten Seite einer Funktionsfläche abragen. Eine Funktionsfläche erlaubt die Anordnung von Haftmittel auf dem Profil. Durch zwei Schenkel kann das Profil klammerartig ausgestaltet sein, um eine oder mehrere Falten zwischen sich aufzunehmen. Vorzugsweise sind die Schenkel elastisch deformierbar.

Ein erster Schenkel könnte s-förmig ausgebildet sein. Durch diese konkrete Ausgestaltung ist der erste Schenkel besonders elastisch deformierbar. Des Weiteren ist er sehr stabil gegen ein eventuelles Abbrechen ausgebildet.

Ein zweiter Schenkel könnte mit einem Stufenversatz versehen sein. Durch diese konkrete Ausgestaltung kann die letzte Falte derart in der Stufe des zweiten Schenkels aufgenommen sein, dass deren Faltenwand mit einem oberen Teil des Schenkels fluchtet. Hierdurch kann ein Stimseitenstreifen auf den zweiten Schenkel und die letzte Faltenwand aufgeklebt werden, ohne dass die Faltenwand eine Unebenheit oder Auswölbung des Stimseitenstreifens erzeugt.

Vor diesem Hintergrund könnte die Befestigungseinrichtung einen Schutzüberstand aufweisen, welcher in Richtung der Haftmittel von einer Funktionsfläche abragt. Der Schutzüberstand gewährleistet, dass Klebstoff, mit dem ein Stimseitenstreifen auf die Befestigungseinrichtung aufgeklebt wird, nicht mit den Haftmitteln in Kontakt tritt.

Die Befestigungseinrichtung könnte an zumindest einer Stirnseite angeordnet sein. Hierdurch wird die stirnseitige Endfalte stabilisiert.

Zwischen der Befestigungseinrichtung und einem stirnseitig angeordneten Stimseitenstreifen könnte mindestens eine Falte mit einer Faltenwand aufgenommen sein. Hierdurch wird eine feste und unlösbare Verbindung zwischen der Befestigungseinrichtung und dem Filtermedium hergestellt.

Die Längsseiten könnten von längsseitig angeordneten Längsseitenstreifen bedeckt sein. Die Längsseitenstreifen bilden gemeinsam mit den Stimseitenstreifen einen Rahmen für das Filtermedium, so dass Bypässe vermieden werden, durch die Tonerstaub entweichen kann.

Vor diesem Hintergund könnten die Oberkanten der Stimseitenstreifen und die Oberkanten der Längsseitenstreifen mit der Oberkante der Haftmittel fluchten. Hierdurch wird eine ebene Anlage des Filterelement an einer Gegenfläche eines Laserdruckers, Faxgerätes oder Kopiergerätes bewirkt. Ritzen und Spalten zwischen Filterelement und Gegenfläche werden wirkungsvoll vermieden.

Die Stimseitenstreifen und die Längsseitenstreifen könnten aus einem Vliesstoff gefertigt sein. Vliesstoffe schmiegen sich sehr gut abdichtend an Strukturen an.

Dabei könnte das Filtermedium aus einem Vliesstoff gefertigt sein. Durch diese konkrete Ausgestaltung kann wirkungsvoll Tonerstaub gefiltert werden. Im Falle einer einheitlichen Ausbildung des gefalteten Filtermediums sowie der Stimseitenstreifen und Längsseitenstreifen kann das Filterelement problemlos verbrannt oder anderweitig erttsorgt werden.

Die Befestigungseinrichtung könnte mittels Hotmelt bzw. mit einem Hotmeltklebstoff festgelegt sein. Hierdurch kann die Befestigungseinrichtung verliersicher mit dem Filterelement bzw. dem Filtermedium verbunden werden. Konkret könnte die Befestigungseinrichtung zusammen mit der letzten bzw. äußersten Falte mittels Hotmelt mit dem Stirnseitenstreifen verklebt sein. Hierdurch wird eine sehr gute Abdichtungswirkung erzielt.

Das Flauschband könnte von einem Hakenband bedeckt sein. Das Hakenband kann dauerhaft an einer Gegenfläche des Laserdruckers, Kopiergerätes oder Telefaxgerätes angebracht sein.

Vor diesem Hintergrund könnte das Hakenband selbstklebend und mit einer abziehbaren Bedeckung ausgerüstet sein. Durch diese konkrete Ausgestaltung ist das Hakenband problemlos und rasch an einer Gegenfläche anordenbar.

Es gibt nun verschiedene Möglichkeiten, die Lehre der vorliegenden Erfindung in vorteilhafter Weise auszugestalten und weiter zu bilden. Dazu ist einerseits auf die nachgeordneten Ansprüche, andererseits auf die nachfolgende Erläuterung eines bevorzugten Ausführungsbeispiels des erfindungsgemäßen Filterelements anhand der Zeichnung zu verweisen.

In Verbindung mit der Erläuterung des bevorzugten Ausführungsbeispiels anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: in einer Schnittzeichnung ein stirnseitiger Bereich eines Filterelements mit einem eingesteckten Profil,
- Fig. 2: eine Schnittansicht des gesamten Filterelements gemäß Fig. 1,
- Fig. 3: eine Draufsicht auf das Filterelement gemäß Fig. 2,
- Fig. 4: eine Schnittansicht des einsteckbaren Profils und
- Fig. 5: eine perspektivische Ansicht des einsteckbaren Profils.

### Ausführung der Erfindung

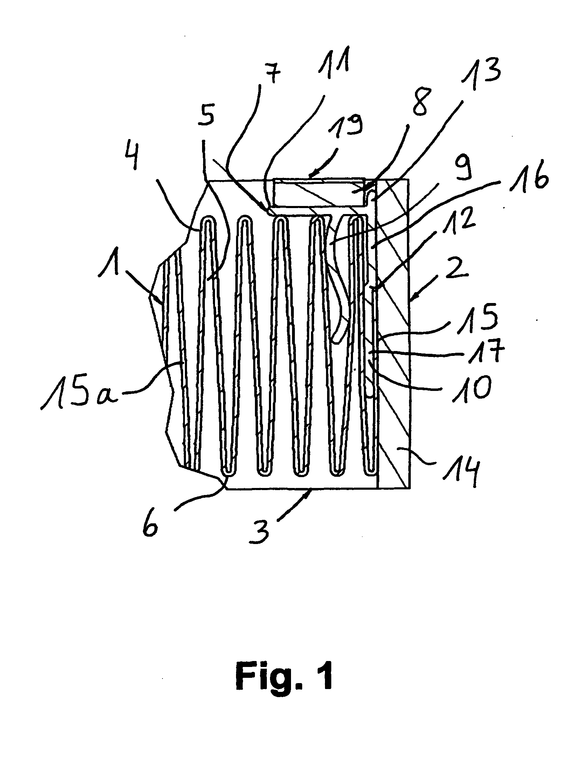

Fig. 1 zeigt ein Filterelement zur Verwendung an Laserdruckern, Fax- oder Kopiergeräten, umfassend ein gefaltetes Filtermedium 1, wobei das gefaltete Filtermedium 1 Stirnseiten 2 und Längsseiten 3 aufweist, wobei das Filtermedium 1 Falten 4 mit Faltentälem 5 und Faltenspitzen 6 aufweist und wobei dem Filterelement eine Befestigungseinrichtung 7 mit Haftmitteln 8 zugeordnet ist. Die Befestigungseinrichtung 7 ist als in die Falten 4 bzw. in die Faltentäler 5 einsteckbares Profil ausgestaltet.

Die Befestigungseinrichtung 7 weist zwei Schenkel 9,10 auf, wobei die Schenkel 9, 10 von der den Haftmitteln 8 abgewandten Seite einer Funktionsfläche 11 abragen. Der erste Schenkel 9 ist s-förmig ausgebildet Der zweite Schenkel 10 ist mit einem Stufenversatz 12 versehen.

Die Befestigungseinrichtung 7 weist einen Schutzüberstand 13 auf, welcher in Richtung der Haftmittel 8 von der Funktionsfläche 11 abragt. Die Befestigungseinrichtung 7 ist an jeder der Stirnseiten 2 angeordnet

Zwischen der Befestigungseinrichtung 7 und einem stirnseitig angeordneten Stimseitenstreifen 14 ist eine letzte bzw. äußerste Falte 4 mit einer Faltenwand 15 aufgenommen. Die letzte Falte 4 bzw. Faltenwand 15 ist etwa halb so hoch wie die übrigen Faltenwände 15a des Filtermediums 1. Die letzte Faltenwand 15 fluchtet mit einem oberen Teil 16 des zweiten Schenkels 10. Hierdurch liegt der Stirnseitenstreifen 14 plan und eben, ohne Ausbeulung, an der Befestigungseinrichtung 7 an. Die letzte Falte 4 liegt in einer Stufe des Stufenversatzes 12 am unteren Teil 17 des zweiten Schenkels 10 an. Dabei ist die Befestigungseinrichtung 7 zusammen mit der letzten bzw. äußersten Falte 4 durch einen Hotmeltklebstoff mit dem Stimseitenstreifen 14 verklebt.

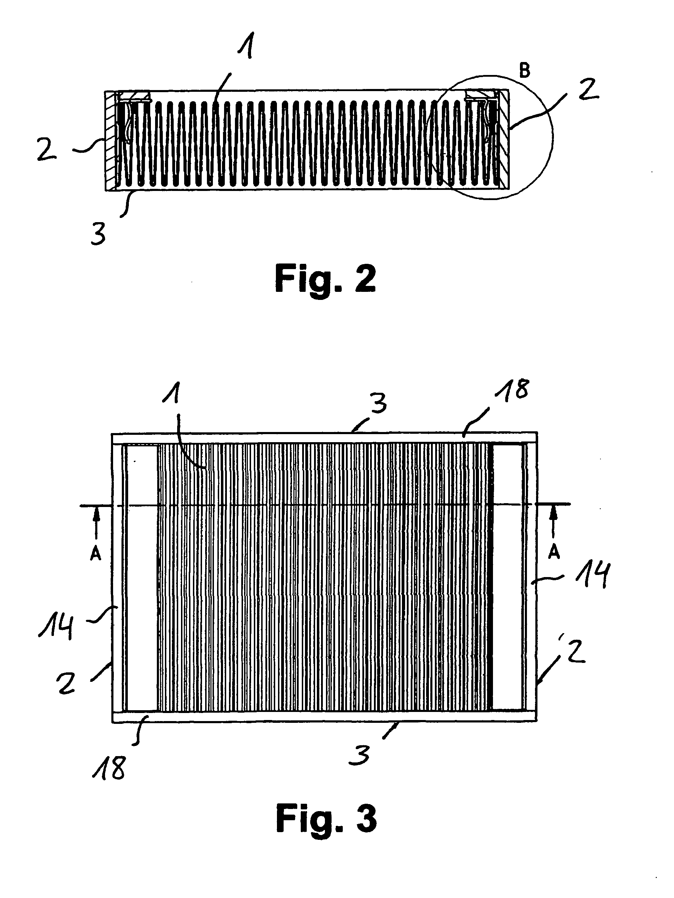

Fig. 2 zeigt das gesamte Filterelement gemäß Fig. 1 in einer Schnittansicht. In Fig. 1 ist lediglich der durch den Kreis B umrissene Ausschnitt des Filterelements detailliert dargestellt Die Befestigungseinrichtung 7 ist an jeder der Stirnseiten 2 angeordnet.

Fig. 3 zeigt das Filterelement gemäß den Fig. 1 und 2 in einer Draufsicht. Die Längsseiten 3 sind von längsseitig angeordneten Längsseitenstreifen 18 bedeckt. Die Oberkanten der Stimseitenstreifen 14 und die Oberkanten der Längsseitenstreifen 18 fluchten mit der Oberkante der Haftmittel 8. Dies ist in Fig. 1 und 2 gut erkennbar. Die Stimseitenstreifen 14 und die Längsseitenstreifen 18 sind aus einem Vliesstoff gefertigt. Das Filtermedium 1 ist aus einem Vliesstoff gefertigt.

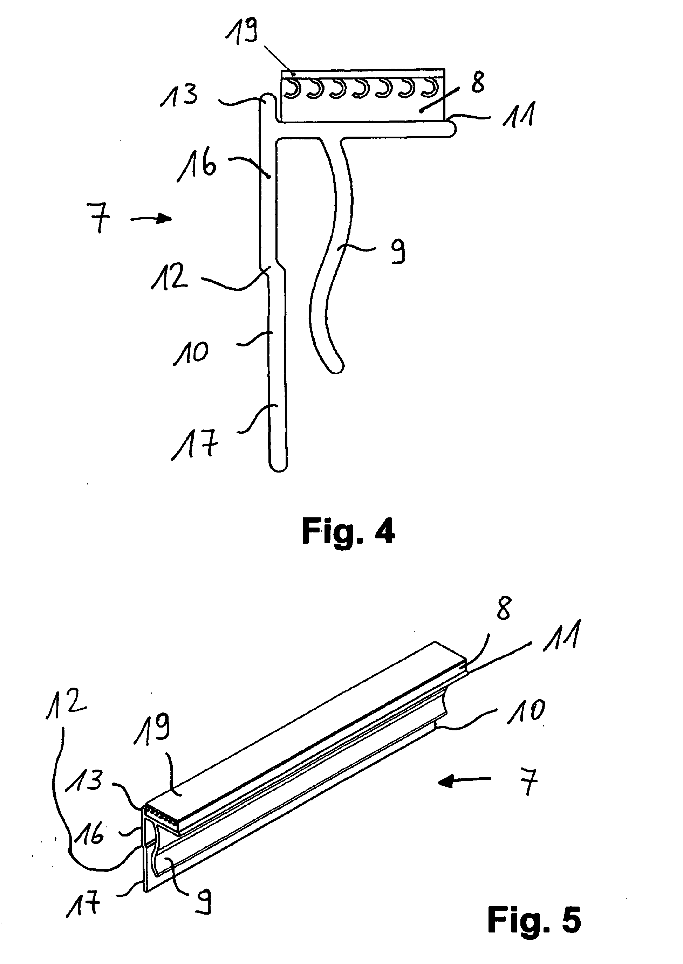

Fig. 4 zeigt die Befestigungseinrichtung 7, welche als Profil ausgestaltet ist, in einer Schnittansicht. Die Befestigungseinrichtung 7 weist auf ihrer Funktionsfläche 11 Haftmittel 8 auf, die als Flauschband ausgestaltet sind. Das Flauschband ist von von einem Hakenband 19 bedeckt. Das Hakenband 19 ist selbstklebend und mit einer nicht gezeigten, abziehbaren Bedeckung ausgerüstet

Die Befestigungseinrichtung 7 weist zwei Schenkel 9, 10 auf, wobei die Schenkel 9, 10 von der den Haftmitteln 8 abgewandten Seite einer Funktionsfläche 11 abragen. Der erste Schenkel 9 ist s-förmig ausgebildet. Der zweite Schenkel 10 ist mit einem Stufenversatz 12 versehen. Die Befestigungseinrichtung 7 weist einen Schutzüberstand 13 auf, welcher in Richtung der Haftmittel 8 von der Funktionsfläche 11 abragt.

Fig. 5 zeigt eine perspektivische Ansicht der Befestigungseinrichtung 7.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor gewählte Ausführungsbeispiel lediglich zu Erörterung der erfindungsgemäßen Lehre dient, diese jedoch nicht auf dieses Ausführungsbeispiel einschränkt.

## Patentansprüche

1. Filterelement zur Verwendung an oder in Laserdruckern, Fax oder Kopiergeräten, umfassend ein gefaltetes Filtermedium (1), wobei das gefaltete Filtermediums (1) Stirnseiten (2) und Längsseiten (3) aufweist, wobei das Filtermedium (1) Falten (4) mit Faltentälern (5) und Faltenspitzen (6) aufweist, wobei dem Filtermedium (1) eine Befestigungseinrichtung (7) mit Haftmitteln (8) zugeordnet ist, **wobei** die **Befestigungseinrichtung (7) die Haftmittel (8) auf einer Funktionsfläche (11) aufweist und wobei die** Befestigungseinrichtung (7) als in die Falten (4) einsteckbares Profil ausgestattet ist, **dadurch gekennzeichnet dass die Haftmittel (8) als Flauschband ausgestaltet sind, welches an einem Profil zur Anbringung des Filterelements an einen Laserdrucker, an ein Faxgerät oder an ein Kopiergerät angeordnet ist.**

2. Filterelement nach Anspruch 1, **dadurch gekennzeichnet, dass** die Befestigungseinrichtung (7) zwei Schenkel (9, 10) aufweist, wobei die Schenkel (9, 10) von der den Haftmitteln (8) abgewandten Seite einer Funktionsfläche (11) abragen.

3. Filterelement nach Anspruch 2, **dadurch gekennzeichnet, dass** ein erster Schenkel (9) s-förmig ausgebildet ist.

4. Filterelement nach Anspruch 2 oder 3, **dadurch gekennzeichnet, dass** ein zweiter Schenkel (10) mit einem Stufenversatz (12) versehen ist.

5. Filterelement nach einem der Ansprüche 1 bis 4, **dadurch gekennzeichnet, dass** die Befestigungseinrichtung (7) einen Schutzüberstand (13) aufweist, welcher in Richtung der Haftmittel (8) von der Funktionsfläche (11) abragt.

6. Filterelement nach einem der Ansprüche 1 bis 5, **dadurch gekennzeichnet, dass** die Befestigungseinrichtung (7) an zumindest einer Stirnseite (2) angeordnet ist

7. Filterelement nach Anspruch 6, **dadurch gekennzeichnet, dass** zwischen der Befestigungseinrichtung (7) und einem stirnseitig angeordneten Stirnseitenstreifen (14) mindestens eine Falte (4) mit einer Faltenwand (15) aufgenommen ist.

8. Filterelement nach einem der Ansprüche 1 bis 7, **dadurch gekennzeichnet, dass** die Längsseiten (3) von längsseitig angeordneten Längsseitenstreifen (18) bedeckt sind.

9. Filterelement nach Anspruch 8, **dadurch gekennzeichnet, dass** die Oberkanten der Stimseitenstreifen (14) und die Oberkanten der Längsseitenstreifen (18) mit der Oberkante der Haftmittel (8) fluchten.

10. Filterelement nach Anspruch 8 oder 9, **dadurch gekennzeichnet, dass** die Stimseitenstreifen (14) und die Längsseitenstreifen (18) aus einem Vliesstoff gefertigt sind.

11. Filterelement nach einem der Ansprüche 1 bis 10, **dadurch gekennzeichnet, dass** das Filtermedium (1) aus einem Vliesstoff gefertigt ist.

12. Filterelement nach **einem der Ansprüche 1 bis 11, dadurch gekennzeichnet, dass** das Flauschband von einem Hakenband (19) bedeckt ist.

13. Filterelement nach Anspruch **12, dadurch gekennzeichnet, dass** das Hakenband (19) selbstklebend und mit einer abziehbaren Bedeckung ausgerüstet ist.

14. Filterelement nach einem der Ansprüche 1 bis **13, dadurch gekennzeichnet, dass** die Befestigungseinrichtung (7) mit einem Hotmeltklebstoff festgelegt ist.

## Claims

1. Filter element for use on or in laser printers, fax or copying devices, comprising a folded filter medium (1), wherein the folded filter medium (1) has end sides (2) and longitudinal sides (3), wherein the filter medium (1) has folds (4) with fold valleys (5) and fold tips (6), wherein the filter medium (1) is assigned a fastening device (7) with adhesive means (8), wherein the fastening device (7) has the adhesive means (8) on a functional surface (11) and wherein the fastening device (7) is designed as a profile which can be inserted into the folds (4), **characterized in that** the adhesive means (8) are designed as a fleece band which is arranged on a profile for mounting the filter element on a laser printer, on a fax device or on a copying device.

2. Filter element according to Claim 1, **characterized in that** the fastening device (7) has two legs (9, 10), wherein the legs (9, 10) protrude from that side of a functional surface (11) facing away from the adhesive means (8).

3. Filter element according to Claim 2, **characterized in that** a first leg (9) is s-shaped.

4. Filter element according to Claim 2 or 3, **characterized in that** a second leg (10) is provided with a stepped offset (12).

5. Filter element according to one of Claims 1 to 4, **characterized in that** the fastening device (7) has a protective projection (13) which protrudes from a functional surface (11) in the direction of the adhesive means (8).

6. Filter element according to one of Claims 1 to 5, **characterized in that** the fastening device (7) is arranged on at least one end side (2).

7. Filter element according to Claim 6, **characterized in that** at least one fold (4) is accommodated by a fold wall (15) between the fastening device (7) and an end side strip (14) arranged on the end side.

8. Filter element according to one of Claims 1 to 7, **characterized in that** the longitudinal sides (3) are covered by longitudinal side strips (18) arranged on the longitudinal sides.

9. Filter element according to Claim 8, **characterized in that** the upper edges of the end side strips (14) and the upper edges of the longitudinal side strips (18) are aligned with the upper edge of the adhesive means (8).

10. Filter element according to Claim 8 or 9, **characterized in that** the end side strips (14) and the longitudinal side strips (18) are produced from a non-woven material.

11. Filter element according to one of Claims 1 to 10, **characterized in that** the filter medium (1) is produced from a non-woven material.

12. Filter element according to one of Claims 1 to 11, **characterized in that** the fleece band is covered by a hook band (19).

13. Filter element according to Claim 12, **characterized in that** the hook band (19) is self-adhesive and equipped with a removable covering.

14. Filter element according to one of Claims 1 to 13, **characterized in that** the fastening device (7) is fixed with a hot-melt adhesive.

## Revendications

1. Élément de filtre à utiliser sur ou dans des imprimantes laser, des fax ou des photocopieuses, comprenant un support de filtre (1) plié, le support de filtre (1) plié comportant des côtés avant (2) et des côtés longitudinaux (3), le support de filtre (1) comportant des plis (4) dotés de creux de pli (5) et de crêtes de pli (6), un dispositif de fixation (7) doté de moyens d'adhérence (8) étant associé au support de filtre (1), le dispositif de fixation (7) comportant les moyens d'adhérence (8) sur une surface fonctionnelle (11) et le dispositif de fixation (7) prenant la forme d'un profilé pouvant être inséré dans les plis (4), **caractérisé en ce que** les moyens d'adhérence (8) prennent la forme d'une bande de tissu à longs poils disposée au niveau d'un profilé servant à amener l'élément de filtre jusqu'à une imprimante laser, un appareil de fax ou une photocopieuse.

2. Élément de filtre selon la revendication 1, **caractérisé en ce que** le dispositif de fixation (7) comporte deux côtés (9, 10), les côtés (9, 10) saillant hors du côté d'une surface fonctionnelle (11) opposé aux moyens d'adhérence (8).

3. Élément de filtre selon la revendication 2, **caractérisé en ce qu'**un premier côté (9) prend une forme de s.

4. Élément de filtre selon la revendication 2 ou 3, **caractérisé en ce qu'**un deuxième côté (10) est pourvu d'un déport étagé (12).

5. Élément de filtre selon l'une quelconque des revendications 1 à 4, **caractérisé en ce que** le dispositif de fixation (7) comporte une saillie de protection (13) saillant de la surface fonctionnelle (11) en direction des moyens d'adhérence (8).

6. Élément de filtre selon l'une quelconque des revendications 1 à 5, **caractérisé en ce que** le dispositif de fixation (7) est disposé au niveau d'au moins un côté avant (2).

7. Élément de filtre selon la revendication 6, **caractérisé en ce qu'**au moins un pli (4) doté d'une paroi de pli (15) est reçu entre le dispositif de fixation (7) et une bande de côté avant (14) disposée du côté avant.

8. Élément de filtre selon l'une quelconque des revendications 1 à 7, **caractérisé en ce que** les côtés longitudinaux (3) sont recouverts de bandes longitudinales (18) disposées du côté longitudinal.

9. Élément de filtre selon la revendication 8, **caractérisé en ce que** les bords supérieurs des bandes de côté avant (14) et les bords supérieurs des bandes longitudinales (18) s'alignent avec le bord supérieur des moyens d'adhérence (8).

10. Élément de filtre selon la revendication 8 ou 9, **caractérisé en ce que** les bandes de côté avant (14) et les bandes de côté longitudinal (18) sont fabriquées à partir d'un tissu non-tissé.

11. Élément de filtre selon l'une quelconque des revendications 1 à 10, **caractérisé en ce que** le support de filtre (1) est fabriqué à partir d'un tissu non-tissé.

12. Élément de filtre selon l'une quelconque des revendications 1 à 11, **caractérisé en ce que** la bande de tissu à longs poils est recouverte par un ruban de crochets (19).

13. Élément de filtre selon la revendication 12, **caractérisé en ce que** le ruban de crochets (19) est autocollant et peut être retiré par le biais d'un cache pouvant être tiré.

14. Élément de filtre selon l'une quelconque des revendications 1 à 13, **caractérisé en ce que** le dispositif de fixation (7) est fixé à l'aide d'une colle thermofusible.
